# EUROPÄISCHE PATENTSCHRIFT

(11) **EP 2 006 130 B1**
(45) Veröffentlichungstag und Bekanntmachung des Hinweises auf die Patenterteilung: **16.01.2013**
(21) Anmeldenummer: 08154182.3
(22) Anmeldetag: 08.04.2008
(51) Int. Cl.: B60G 13/00, B60G 15/07, F16F 9/32, F16F 9/54

(54) **Schwingungsdämpfer mit einer Anbindung an einen Radträger**
Vibration damper connected to a wheel support
Amortisseur d'oscillations doté d'une liaison à un support de roue

(30) Priorität: 18.06.2007 DE 102007028468
(43) Veröffentlichungstag der Anmeldung: 24.12.2008
(73) Patentinhaber: ZF Friedrichshafen AG, 88038 Friedrichshafen (DE)
(72) Erfinder: Stretz, Klaus, 97437 Haßfurt (DE); Renn, Josef, 97337 Dettelbach (DE)

(56) Entgegenhaltungen:
- DE-A1- 10 237 438
- DE-A1- 10 318 537
- DE-A1- 19 622 771
- US-A- 4 531 618

## Beschreibung

Die Erfindung betrifft einen Schwingungsdämpfer gemäß dem Oberbegriff von Patentanspruch 1.

Aus der Fig. 1. der DE 103 18 537 B4 ist bekannt, dass ein mit einem Schwingungsdämpfer verbundener Radträger als Achsanschluss bezogen auf die Fahrzeuglängsachse in einer linken und rechten Ausführungsvariante montiert wird. Würde man einen einheitlichen Radträger verwenden, dann würde der Anschluss für das Lenkungstrapez nicht mehr passen. Die Verbindung zwischen dem Schwingungsdämpfer und dem Radträger erfolgt über einen Spannschlitz im Radträger, in den z. B. eine Lasche des Zylinders eingreift.

Des Weiteren ist bekannt, dass man zum Ausgleich von Längs- und oder Querkräften am Schwingungsdämpfer einen Federteller für eine Fahrzeugtragfeder mit einem sogenannten Off-Set verbaut. Der Kraftdurchstoßpunkt der Fahrzeugtragfeder wird bezogen auf die Längsachse des Schwingungsdämpfers versetzt. Bei einem derartigen Schwingungsdämpfer ist der Federteller in Umfangsrichtung drehfest fixiert. Diese drehorientierte Montage des Federtellers am Schwingungsdämpfer hat zur Folge, dass es für die linke und die rechte Fahrzeugseite unterschiedliche Schwingungsdämpfer gibt. In der Produktion des Schwingungsdämpfers selbst, auch in der Fahrzeugproduktion oder im Reparaturfall wirkt sich dieser Umstand sehr negativ aus, da insbesondere ein logistischer Aufwand besteht.

Die Aufgabe der vorliegenden Erfindung besteht darin, das aus dem Stand der Technik bekannte Problem der links- und rechtsseitigen Ausführung eines Schwingungsdämpfers zu beheben.

Erfindungsgemäß wird die Aufgabe dadurch gelöst, dass der desachsierte Kraftdurchstoßpunkt für beide Fahrzeugseiten bezogen auf die Fahrzeuglängsachse durch eine Verdrehung des Zylinders zum Achsanschluss erfolgt, wobei der Schwingungsdämpfer unabhängig von seiner Einbauseite im Fahrzeug eine einheitliche Ausrichtung des Federtellers in Umfangsrichtung zum Zylinder aufweist, und der Verdrehwinkel in der Verbindung zwischen dem Zylinder und dem Achsanschluss von dem Achsanschluss kompensiert wird.

Mit der Kompensation der Verdrehung des Zylinders innerhalb des Achsanschlusses kann ein Schwingungsdämpfertyp für beide Fahrzeugseiten verwendet werden. Ein Mehraufwand bei der Herstellung des Achsanschlusses besteht nicht.

In weiterer vorteilhafter Ausgestaltung ist die Einbauorientierung zwischen dem Zylinder und dem Achsanschluss durch eine Profilierung des Zylinders zum Achsanschluss ausgeführt. Man kann z. B. einen von der idealen Kreisform abweichenden Zylinder verwenden. Alternativ besteht die Möglichkeit, dass an dem Zylinder ein zur Drehorientierung befestigtes Teil zur Anwendung kommt.

Gemäß einem vorteilhaften Unteranspruch weist der Achsanschluss ein mit dem Zylinder zusammenwirkendes schellenartiges Spannelement auf, wobei der Zylinder in einen Spannschlitz des Achsanschlusses eingreift. Bei der Montage ergibt sich eine eindeutige Zuordnung des Zylinders zum Achsanschluss.

Häufig werden an dem Zylinder zusätzliche Halteteile befestigt, z. B. Bremsschlauchhalter oder Stabilisatorhalter. Gemäß der Erfindung ist das an dem Zylinder verwendete Halteteil derart ausgeführt ist, das eine links- und rechtsseitige Einbaulage des Schwingungsdämpfers bezogen auf die Fahrzeuglängsachse möglicht ist. Man kann z. B. einen Stabilisatorhalter mit zwei Anschlussöffnungen verwenden oder alternativ einen einzigen Halter, der exakt radial zur Zylinderlängsachse verläuft.

Anhand der folgenden Figurenbeschreibung soll die Erfindung näher erläutert werden.

Es zeigt:
- Fig. 1: Einbausituation des Schwingungsdämpfers an einem Achsanschluss.
- Fig. 2: Vereinfachte Draufsicht der Einbausituation
- Fig. 3: Zylinder mit Halteteil

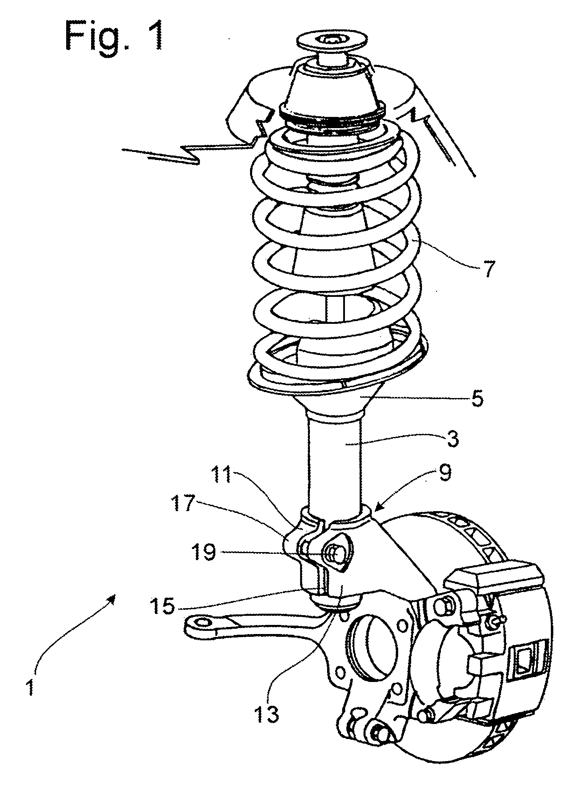

Die Fig. 1 zeigt einen Schwingungsdämpfer in der Bauform eines Federbeins 1, wie es insbesondere bei Fahrzeugen der Kompaktklasse eingesetzt wird. Das Federbein verfügt über einen an einem Zylinder 3 in der Regel angeschweißten Federteller 5, auf dem sich eine Fahrzeugtragfeder 7 abstützt. An einem unteren Ende des Zylinders ist ein Achsanschluss 9 mittels einer Klemmverbindung 11 befestigt.

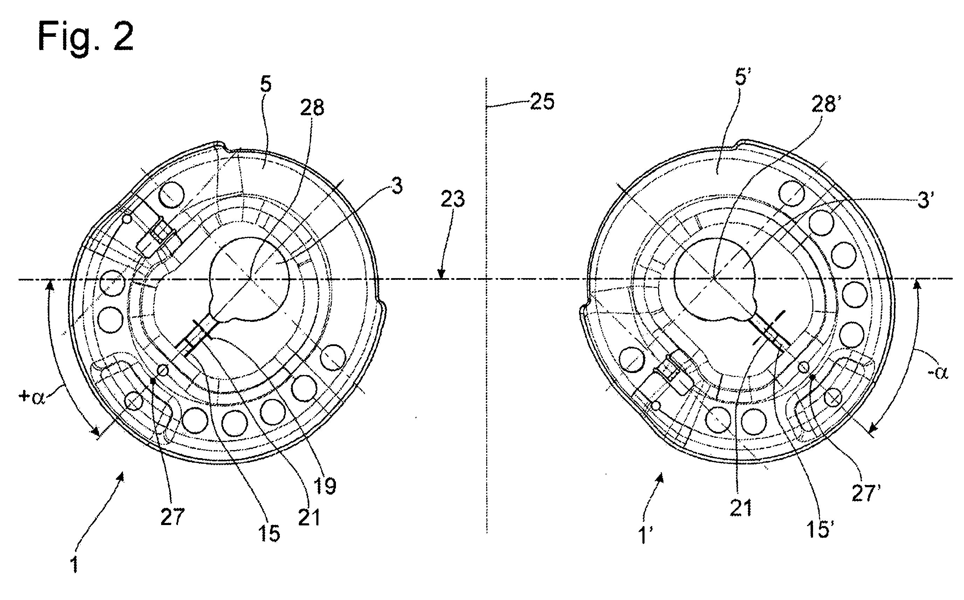

Der Achsanschluss verfügt über einen schellenartigen Spannelement 13, der einen Schlitz 15 aufweist. Durch den Schlitz 15 ergibt sich eine Elastizität des Spannabschnitts in Umfangsrichtung. Im Bereich des Schlitzes ist der Spannabschnitt mit einem Vorsprung 17 versehen, der eine quer zur Längsachse des Federbeins verlaufende Durchgangsöffnung aufweist, die einen Gewindeteil umfasst. In der Durchgangsöffnung ist ein Befestigungsmittel 19 in der Form einer Spannschraube eingeschraubt. An dem Zylinder ist eine radiale Befestigungslasche (Fig. 2) zur Festlegung einer drehorientierten Einbaulage des Zylinders innerhalb des Achsanschlusses 9 ausgeführt. Alternativ kann der Zylinder auch eine von der ideal runden Kreisform abweichenden Querschnitt aufweisen, der mit dem Achsanschluss 9 eine Formschlussverbindung bildet.

Die Figur 2 zeigt eine Draufsicht der Einbausituation zwei Schwingungsdämpfer 1; 1', z. B. an einer Vorderachse eines Fahrzeugs. Die Achse 23 wird durch die horizontale strichpunktierte Linie symbolisiert. Die Fahrzeuglängsachse ist mit der Bezugsziffer gekennzeichnet. Der an sich bekannter Federteller 5; 5' verfügt über einen Kraftdurchstoßpunkt 27; 27', der auf der Verbindungslinie Schwingungsdämpferlängsachse 28; 28' und der Hauptachse A-A des Federtellers 5; 5' liegt. Beispielhaft sind der unrunde Zylinder und die Befestigungslasche 21 dargestellt, die in den Schlitz 15 des Achsanschlusses 9 eingreifen, dargestellt. Wie man deutlich erkennen kann, ist der rechte Federteller 5' um den Verdrehwinkel minus α zur Fahrzeugachse 23 verdreht eingebaut. Ein identischer Schwingungsdämpfer kann aber auch an der linken Seite der Fahrzeugachse verwendet werden, wenn der Schwingungsdämpfer 1 bezogen auf die Fahrzeugachse um plus α zur Fahrzeugachse 23 montiert wird. In der Praxis ist der angegebene Winkel deutlich kleiner. Der übergroße Verdrehwinkel α wurde zur besseren Erkennbarkeit der symmetrischen Anordnung beider Schwingungsdämpfer 1, 1 'bezogen auf die Fahrzeuglängsachse 25 verwendet. Der Verdrehwinkel α des Schwingungsdämpfers 1; 1 ' wird von dem Achsanschluss 9 kompensiert, in dem der Schlitz 15 nicht parallel zur Achse 23, sondern um den Verdrehwinkel α versetzt ausgeführt ist und beide Achsanschlüsse 9; 9' einen zur Fahrzeuglängsachse spiegelbildlichen Schlitz 15; 15' zur Fahrzeuglängsachse 25 aufweisen.

Die Erfindung ist nicht an einen Achsanschluss 9 mit einem Schlitz 15 gebunden, sondern davon unabhängig zu sehen. Das Prinzip kann auch bei einem Achsanschluss 9 verwendet werden, der mit einem Haltebügel gemäß der DE 29 32 138 A1 an einem Schwingungsdämpfer 1; 1 ' zusammenwirkt.

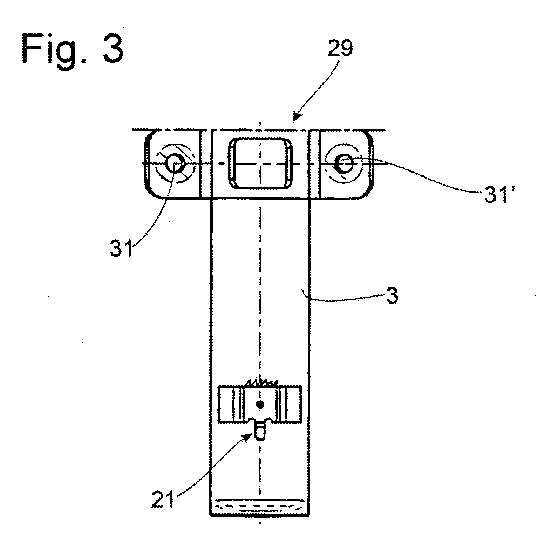

Die Fig. 3 zeigt den unteren Abschnitt des Zylinders 3 mit einem Halteteil 29, das zwei Anschlussöffnungen 31; 31 ' für einen nicht dargestellten Stabilisator. Jeweils eine Anschlussöffnung wird für den Stabilisator verwendet, so dass mit einem einzigen Halteteil 29 beide Einbaupositionen der Anschlussöffnungen zur Achse 23 abgedeckt werden können.

## Patentansprüche

1. Schwingungsdämpfer mit einem Zylinder, an dem ein Federteller für eine Fahrzeugtragfeder verdrehfest montiert ist, die bezogen auf eine Längsachse des Zylinders einen desachsierten Kraftdurchstoßpunkt aufweist, wobei der Zylinder bezogen auf seine Längsachse in Umfangsrichtung einbauorientiert mit einem Achsanschluss verbunden ist,
**dadurch gekennzeichnet,**
**dass** der desachsierte Kraftdurchstoßpunkt (27; 27') für beide Fahrzeugseiten bezogen auf die Fahrzeuglängsachse (25) durch eine Verdrehung des Zylinders (3) zum Achsanschluss (9) erfolgt, wobei der Schwingungsdämpfer (1) unabhängig von seiner Einbauseite im Fahrzeug eine einheitliche Ausrichtung des Federtellers (5) in Umfangsrichtung zum Zylinder (3) aufweist, und der Verdrehwinkel (α) in der Verbindung zwischen dem Zylinder (3) und dem Achsanschluss (9) von dem Achsanschluss (9) kompensiert wird.

2. Schwingungsdämpfer nach Anspruch 1,
**dadurch gekennzeichnet,**
**dass** die Einbauorientierung zwischen dem Zylinder (3) und dem Achsanschluss (9) durch eine Profilierung des Zylinders (3) zum Achsanschluss (9) ausgeführt ist.

3. Schwingungsdämpfer nach Anspruch 1,
**dadurch gekennzeichnet,**
**dass** der Achsanschluss (9) ein mit dem Zylinder (3) zusammenwirkendes schellenartiges Spannelement (13) aufweist, wobei der Zylinder (3) in einen Spannschlitz (15) des Achsanschlusses (9) eingreift.

4. Schwingungsdämpfer nach Anspruch 1,
**dadurch gekennzeichnet,**
**dass** an dem Zylinder (5) mindestens ein Halteteil (29) ausgeführt ist, das eine links- und rechtsseitige Einbaulage des Schwingungsdämpfers (1; 1') bezogen auf die Fahrzeuglängsachse (25) ermöglicht.

## Claims

1. Vibration damper, having a cylinder on which a spring plate for a vehicle supporting spring is mounted in a rotationally fixed manner, which vehicle supporting spring has, with respect to a longitudinal axis of the cylinder, an axis-offset force penetration point, wherein the cylinder is connected, in its installation orientation in the circumferential direction with respect to its longitudinal axis, to an axle connection,
**characterized**
**in that** the axis-offset force penetration point (27; 27') is realized, for both vehicle sides with respect to the vehicle longitudinal axis (25), by means of a rotation of the cylinder (3) with respect to the axle connection (9), wherein the vibration damper (1) has, independently of its installation side in the vehicle, a uniform alignment of the spring plate (5) in the circumferential direction with respect to the cylinder (3), and the angle of rotation (α) in the connection between the cylinder (3) and the axle connection (9) is compensated by the axle connection (9).

2. Vibration damper according to Claim 1,
**characterized**
**in that** the installation orientation between the cylinder (3) and the axle connection (9) is formed by a profiling of the cylinder (3) with respect to the axle connection (9).

3. Vibration damper according to Claim 1,
**characterized**
**in that** the axle connection (9) has a shell-like clamping element (13) which interacts with the cylinder (3), wherein the cylinder (3) engages into a clamping slot (15) of the axle connection (9).

4. Vibration damper according to Claim 1,
**characterized**
**in that** there is formed on the cylinder (5) at least one holding part (29) which permits a lefthand-side and a right-hand-side installation position of the vibration damper (1; 1') with respect to the vehicle longitudinal axis (25).

## Revendications

1. Amortisseur d'oscillations comprenant un cylindre, sur lequel est montée, de manière fixée en rotation, une coupelle de ressort pour un ressort de support de véhicule, qui présente, par rapport à un axe longitudinal du cylindre, un point de passage de force désaxé, le cylindre orienté en position installée dans la direction périphérique par rapport à son axe longitudinal étant connecté à un raccord d'essieu,
**caractérisé en ce que**
le point de passage de force désaxé (27 ; 27') pour les deux côtés du véhicule par rapport à l'axe longitudinal du véhicule (25) se produit par une rotation du cylindre (3) par rapport au raccord d'essieu (9), l'amortisseur d'oscillations (1) présentant, indépendamment de son côté d'installation dans le véhicule, une orientation unitaire de la coupelle de ressort (5) dans la direction périphérique par rapport au cylindre (3), et l'angle de rotation (α) dans la liaison entre le cylindre (3) et le raccord d'essieu (9) est compensé par le raccord d'essieu (9).

2. Amortisseur d'oscillations selon la revendication 1,
**caractérisé en ce que**
l'orientation d'installation entre le cylindre (3) et le raccord d'essieu (9) est réalisée par un profilage du cylindre (3) par rapport au raccord d'essieu (9).

3. Amortisseur d'oscillations selon la revendication 1,
**caractérisé en ce que**
le raccord d'essieu (9) présente un élément de serrage (13) de type collier de serrage coopérant avec le cylindre (3), le cylindre (3) venant en prise dans une fente de serrage (15) du raccord d'essieu (9).

4. Amortisseur d'oscillations selon la revendication 1,
**caractérisé en ce que**
au moins une partie de retenue (29) est réalisée sur le cylindre (5), laquelle permet une position d'installation du côté gauche et du côté droit de l'amortisseur d'oscillations (1 ; 1') par rapport à l'axe longitudinal du véhicule (25).
